# EUROPÄISCHE PATENTSCHRIFT

(11) **EP 1 128 097 B1**
(45) Veröffentlichungstag und Bekanntmachung des Hinweises auf die Patenterteilung: **07.04.2010**
(21) Anmeldenummer: 01101781.1
(22) Anmeldetag: 26.01.2001
(51) Int. Cl.: F16H 63/30

(54) **Vorrichtung zum Übertragen von Wähl- und/oder Schaltbewegungen**
Device for conveying select and/or shift movements
Dispositif pour transmettre des mouvements de selection et/ou de changement de vitesse

(30) Priorität: 25.02.2000 DE 10008872
(43) Veröffentlichungstag der Anmeldung: 29.08.2001
(73) Patentinhaber: Schaeffler KG, 91074 Herzogenaurach (DE)
(72) Erfinder: Schübel, Rainer, 91522 Ansbach (DE); Winkler, Manfred, 91086 Aurachtal (DE); Döppling, Horst, 91074 Herzogenaurach (DE)

(56) Entgegenhaltungen:
- DE-A- 4 116 823
- DE-A- 4 328 399
- DE-A- 4 416 319
- FR-A- 2 762 659

## Beschreibung

### Gebiet der Erfindung

Die Erfindung betrifft eine Vorrichtung zum Übertragen von Wähl- und/oder Schaltbewegungen mit zumindest einem Betätigungsglied, einem das Betätigungsglied tragenden Tragkörper und wenigstens einem den Tragkörper stützenden und in dem Tragkörper angeordneten Wälzlager.

### Hintergrund der Erfindung

Schaltgabeln und ähnliche Betätigungsglieder, wie Schaltfinger, sind in Vorrichtungen zum Übertragen von Wähl- und/oder Schaltbewegungen in Wechselgetrieben angeordnet. Dazu sind sie in der Regel relativ zu einem Getriebegehäuse längsverschiebbar und/oder schwenkbar an Tragelementen wie Bolzen, Schaltwellen oder Schaltschienen gelagert oder befestigt. Wenn die Schaltgabeln an dem Tragelement befestigt sind, ist das Tragelement relativ beweglich zum Getriebegehäuse in dem Getriebegehäuse oder anderen getriebefesten Bauelementen gelagert. Als Lager für die Tragelemente dienen dazu Wälz- oder Gleitlager für Längsbewegungen und/oder Drehbewegungen bzw. Schwenkbewegungen. Wenn die Betätigungsglieder auf den Tragelementen relativ beweglich zu den Tragelementen gelagert sind, erfolgt dies oftmals ebenfalls mit Wälz- oder Gleitlagern für Drehbewegungen und/oder Schwenkbewegungen. Dazu ist das Betätigungsglied mit einem Tragkörper versehen, der, meist als Nabe ausgebildet, eine Bohrung aufweist. In der Bohrung sind ein oder mehrere Wälz- oder Gleitlager aufgenommen. Bevorzugt sind Betätigungsglieder auf den Tragelementen mittels eines oder mehrerer Wälzlager gelagert. Die Wälzlager sind mit einem Außenring in die Bohrung des Tragkörpers eingepreßt.

Eine derartige Vorrichtung ist in der gattungsgemäßen DE 43 28 399A beschrieben. Der als Schalthülse bezeichnete Tragkörper ist beweglich auf einem als Wellenzapfen bezeichneten Tragelement gelagert und trägt ein Eingriffselement für einen Schaltfinger. Außerdem ist der Tragkörper mit einem Schaltfinger versehen. Der Tragkörper ist einteilig mit dem Eingriffselement und dem Schaltfinger ausgebildet und beispielsweise aus Guss. Die schwenkbare und längsbewegliche Lagerung des Tragkörpers auf dem Tragelement ist durch ein Wälzlager abgesichert. Das Wälzlager ist aus einem Lagerring und aus Wälzkörpern gebildet. Die Wälzkörper sind mit einem Käfig in dem Lagerring geführt. Die Laufbahnen der Wälzkörper innen sind durch die Oberfläche des Wellenzapfens gebildet. Die äußeren Laufbahnen der Wälzkörper sind innen an dem Lagerring ausgebildet, der in den Tragkörper eingepresst ist.

DE 44 16 319A1 zeigt ein Wälzlager zur Lagerung einer Schaltschiene oder Schaltwelle, das aus einem äußeren Lagerring und aus Wälzkörpern gebildet ist. Die äußeren Laufbahnen der Wälzkörper sind an dem Lagerring ausgebildet. Das Wälzlager weist außerdem einen Flansch zur unbeweglichen Befestigung des Wälzlagers an einem Gehäuse auf.

Weitere Bestandteile einer Vorrichtung zum Übertragen von Wähl- und/oder Schaltbewegungen können z. B. Führungsgabeln und Dämpfungselemente sein. Mit den Führungsgabeln ist eine gelenkige Verbindung zu außenseitig angeordneten Schaltfingern oder anderen ähnlichen auf die Vorrichtung einwirkenden Gliedern hergestellt. Das oder die Dämpfungselemente dämpfen Stöße zwischen den relativ zueinander beweglichen Elementen der Vorrichtung, wie z. B. einer Schaltgabel und einem zum Gehäuse des Wechselgetriebes feststehenden Anschlag. Der Anschlag kann z. B. durch eine andere Schaltgabel oder einen direkt am Gehäuse angeordneten Festpunkt gebildet sein. Mittels des Anschlages wird beispielsweise der Weg der bewegten Schaltgabel und damit der Schaltweg begrenzt. Eine derartige Begrenzung sichert eine exakte Schaltposition und damit einen exakt eingelegten Gang im Wechselgetriebe ab.

In DE 43 28 399A1 ist das Dämpfungselement durch beidseitig des Tragkörpers jeweils eine Schraubenfeder gebildet, die außerdem eine Rückstellfunktion hat, d.h. die den Tragkörper aus einer Schaltstellung in eine Ausgangsstellung zurückführt.. Ein Anschlag für den Tragkörper ist der Rand einer auf dem Wellenzapfen befestigten Hülse. Ein anderer Anschlag ist ein Abschnitt des Gehäuses des Getriebes..

Die Vorteile der Lagerung von Tragkörpern auf Tragelementen mittels Wälzlagern sind bekannt und liegen beispielsweise in der reibungsarmen Funktion der Wälzlager und den damit verbundenen Auswirkungen auf den Bedienkomfort. In der Produktübersicht der INA Wälzlager Schaeffler oHG "Anwendungsbeispiele - Produkte für die Schaltung in KFZ-Getrieben" vom August 1993 ist auf Seite 7 eine Variante von einer Lagerung einer Schaltgabel auf einer Schaltstange dargestellt. Das Wälzlager ist durch Wälzkörper, in diesem Falle Kugeln, gebildet, die einzeln, paarweise oder in größerer Anzahl hinter- bzw. nebeneinander in einem Käfig geführt sind. Die Wälzkörper rollen auf einer Innenlaufbahn ab. Die Innenlaufbahn ist durch die im Querschnitt gesehen kreisförmig ausgebildete Außenkontur der Schaltstange gebildet. Die Außenlaufbahn ist Bestandteil des Außenringes des Wälzlagers. Der Außenring ist durch eine dünnwandige sowie gezogene Hülse gebildet. Die Innen- und Außenlaufbahnen sind in der Regel gehärtet ausgeführt. Bekannt sind Anwendungen, bei denen die Innenlaufbahn durch einen, beispielsweise gezogenen und auf der Schaltstange befestigten Innenring gebildet ist. Bekannt sind auch Anwendungen, bei denen der Querschnitt der Schaltstange oder eines anderen Tragelementes nicht rund ausgebildet ist, sondern ein rechteckiges oder ein beliebiges von der kreisrunden Form abweichendes Profil aufweist, wie es häufig bei aus Blech gestanzten Tragelementen zu finden ist. Das Wälzlager und seine Elemente sowie die Laufbahnen sind dann dieser Geometrie zweckentsprechend angepasst. Denkbar ist auch, ein Wälzlager einzusetzen, das, wie auf Seite 11 der oben genannten Produktübersicht dargestellt, für das Übertragen von Drehmomenten bzw. als Verdrehsicherung verdrehsteif ausgebildet ist.

An dem Außenring des Wälzlagers stützen sich mittels eines Tragkörpers in der Regel eine Schaltgabel, Schaltfinger und ggf. auch noch weitere Übertragungselemente, wie ein Eingriff für einen Schaltfinger einer Schaltwelle, ab. Dazu ist das Wälzlager in eine Aufnahme, beispielsweise eine Bohrung, des Tragkörpers eingepreßt. Diese Lösungen sind an sich sehr modern ausgeführt und zuverlässig. Der Tragkörper und das/die Betätigungsglieder sind jedoch häufig einstückig aus Messing, Aluminium oder Blech gebildet. Die Kontur ist kompliziert herzustellen, der Material- und Gewichtsanteil einer derartigen Vorrichtung ist relativ hoch. Das Einpressen des Wälzlagers in den Tragkörper ist relativ aufwendig. Bei der Montage im Getriebe sind große Toleranzfelder zu berücksichtigen.

### Zusammenfassung der Erfindung

Der Erfindung liegt die Aufgabe zu Grunde, eine Vorrichtung zu schaffen, die sich mit reduziertem Material- und Gewichtsanteil einfach und kostengünstig, insbesondere in einer Massenfertigung, herstellen lässt.

Diese Aufgabe ist mit einer Vorrichtung nach dem Gegenstand des Anspruches 1 gelöst.

Der Tragkörper weist wenigstens eine an zumindest einem in Längsrichtung weisenden Ende des Tragkörpers angeordnete sowie zumindest in Längsrichtung über den Tragkörper herausragende Kunststoffscheibe auf. Die Kunststoffscheibe dient vorzugsweise als Dämpfungselement. Dieses Dämpfungselement wirkt dann, wenn die Vorrichtung bei Längsbewegungen oder auch bei Schwenkbewegungen impulsartig auf eine Wegbegrenzung auftrifft. Mechanische Schwingungen und somit Geräusche werden gedämpft.

Die Vorrichtung weist ein Betätigungsglied, einen das Betätigungsglied tragenden Tragkörper und wenigstens ein den Tragkörper stützendes und in dem Tragkörper angeordnetes Wälzlager auf, wobei das Wälzlager Wälzkörper für die längsbewegliche und/oder schwenkbare Lagerung des Tragkörpers auf einem Tragelement, wenigstens einen die Wälzkörper führenden Käfig und zumindest eine an dem Tragkörper ausgebildete Laufbahn aufweist. Der sonst für derartige Wälzlager typische Außenring entfällt. Die Vorrichtung ist zumindest aus einer Einheit aus Betätigungsglied, Tragkörper und Lagerung gebildet. Durch den Einsatz eines Tragkörpers, welcher gleichzeitig als Laufbahn für die Wälzkörper des Wälzlagers verwendet wird, lässt sich die radiale Bauhöhe, das Gewicht und der Montageaufwand für eine derartige Vorrichtung reduzieren.

Vorstellbar für eine Vorrichtung gemäß Erfindung ist, dass die Innenlaufbahn durch einen, beispielsweise gezogenen, und auf *dem Tragelement* befestigten Innenring oder durch die Oberfläche *des Tragelements* gebildet ist. Vorstellbar ist auch, dass der Querschnitt *des Tragelements, beispielsweise einer Schaltwelle oder Schaltstange,* nicht rund ausgebildet ist, sondern ein rechteckiges oder ein beliebiges von der kreisrunden Form abweichendes Profil aufweist, wie es häufig bei aus Blech gestanzten Tragelementen zu finden ist. Denkbar ist auch, ein Wälzlager einzusetzen, das wie auf Seite 11 der oben genannten INA-Produktübersicht für das Übertragen von Drehmomenten bzw. als Verdrehsicherung ausgebildet ist.

Als bevorzugtes Betätigungsglied ist in einer Ausgestaltung der Erfindung eine Schaltgabel vorgesehen. Diese und andere Betätigungsglieder sind weiterhin vorzugsweise auf den Tragkörper aufgepreßt.

Eine Ausgestaltung der Erfindung sieht vor, dass der Tragkörper und das Betätigungsglied spanlos aus Blech gefertigt sind und die Schaltgabel unlösbar an dem Tragkörper befestigt ist. Der Tragkörper kann beispielsweise aus Band gezogen, durch ein aufgeweitetes Rohr gebildet sein, aus Band gewickelt oder durch ähnliche Verfahren hergestellt werden. Durch spanlose Verfahren lässt sich, insbesondere in der Massenfertigung, eine wirtschaftliche Fertigung erzielen. Die Laufbahnen für die Wälzkörper, Kugeln oder Nadeln bzw. Zylinderrollen, des Wälzlagers sind durch die Innenmantelfläche, beispielsweise eines zylindrischen Tragkörpers oder in den Tragkörper eingeformte Profile, wie Längsrillen, gebildet und während des Formungsprozesses des Tragkörpers eingeformt. Als Material für den Tragkörper sind alle geeigneten Stahlsorten einsetzbar, insbesondere sind härtbare Stähle vorzusehen. Die Laufbahnen sind induktiv härtbar oder der Tragkörper ist komplett mittels Einsatzhärteverfahren oder Durchhärteverfahren gehärtet.

Außer einer unlösbaren Verbindung eines oder mehrerer Betätigungsglieder ist es auch denkbar, dieses mittels einer formschlüssigen Verbindung bzw. Anordnung auf den Tragkörper zu befestigen.

Eine weitere Ausgestaltung der Erfindung sieht eine Vorrichtung vor, deren Käfig zumindest in Längsrichtung relativ zu der Laufbahn beweglich in einer in Längsrichtung ausgerichteten Aufnahme aufgenommen ist. Eine derartige Aufnahme kann durch eine Bohrung oder durch ein kreisrundes Loch gebildet sein, aber auch alle anderen denkbaren und geeigneten Querschnittsprofile aufweisen. Die Aufnahme wiederum ist in dem Tragkörper angeordnet. Vorzugsweise ist ein dünnwandiger spanlos geformter zylindrisch ausgebildeter Tragkörper vorgesehen. An zumindest einem Ende des Tragkörpers ist eine Kunststoffscheibe angeordnet, die axial über den Tragkörper hinausragt und somit bei axialem Auftreffen des Tragkörpers auf einen Anschlag als Dämpfungsmittel wirkt. Gleichzeitig ist an der Kunststoffscheibe zumindest ein Axialanschlag für den längsbeweglichen Käfig vorgesehen. Hierzu ist die Kunststoffscheibe vorzugsweise als gelochte Scheibe ausgebildet. An einer oder an beiden Seiten des Tragkörpers ist eine derartige Lochscheibe stirnseitig angeordnet. Das Tragelement ragt durch das Loch der Scheibe in den Tragkörper hinein oder heraus. Der Axialanschlag ist beispielsweise dann durch den Teil der Lochscheibe gebildet, der den Ringspalt zwischen den Tragelement und der Aufnahme zumindest teilweise verdeckt.

Für einen zumindest in Längsrichtung relativ zu der Laufbahn beweglich in einer Aufnahme angeordneten Käfig ist weiterhin ein Mittel für die Wegbegrenzung in Längsrichtung vorgesehen. Dieses Mittel ist durch einen von dem Tragkörper radial nach innen in die Aufnahme abgehenden Vorsprung gebildet. Dieser Vorsprung ist vorzugsweise aus dem Blech des Tragkörpers ausgeformt oder anders ausgearbeitet. Die bevorzugte Ausführungsform sieht einen nach innen gebördelten Bord vor. Denkbar sind auch Wegbegrenzungen wie Nasen an dem Käfig, die in eine entsprechende Längsnut bzw. Ausformung am Tragkörper eingreifen. Die Länge der Nut bzw. die Ausdehnung der Ausformung bestimmen des axialen Weg bzw. den Schwenkwinkel des Käfigs und damit des Tragelementes.

### Kurze Beschreibung der Zeichnung

Die Erfindung wird nachfolgend anhand von zwei Ausführungsbeispielen näher erläutert. Es zeigen:
- Figur 1: ein Ausführungsbeispiel einer Vorrichtung zum Übertragen von Wähl- und/oder Schaltbewegungen mit einem in Längsrichtung bewegbaren Käfig und einer am Tragkörper angeordneten Kunststoffscheibe,
- Figur 2: ein weiteres, nicht erfindungsgemäßes Beispiel einer Vorrichtung mit einem in Längsrichtung bewegbaren Käfig und einem Mittel zur Wegbegrenzung.

### Detaillierte Beschreibung der Zeichnungen

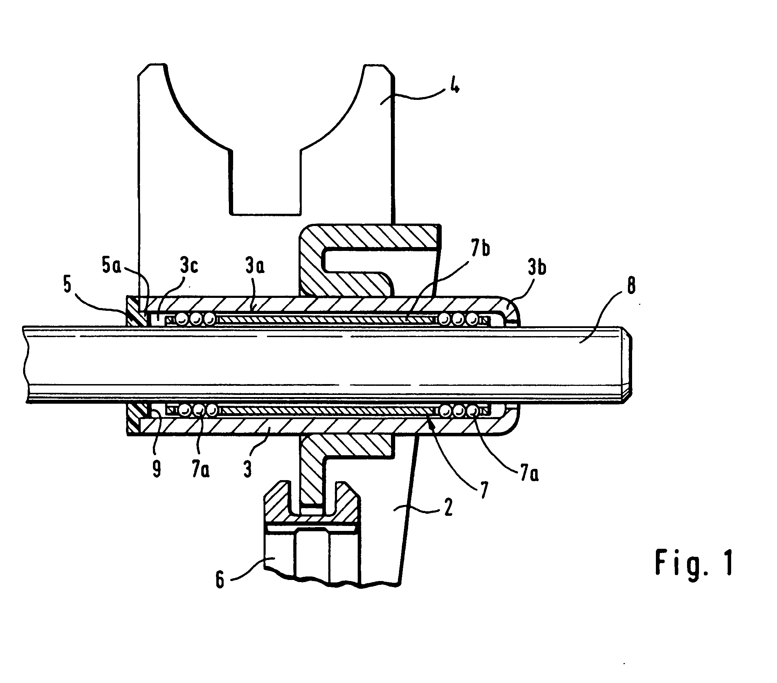

Figur 1 zeigt eine Vorrichtung 1 zum Übertragen von Wähl- und/oder Schaltbewegungen mit einer Schaltgabel 2 als Betätigungsglied, einem Tragkörper 3, einer Führungsgabel 4 und einer Kunststoffscheibe 5 im Teilschnitt. Die Schaltgabel 2 sitzt mit einem Preßsitz auf dem Tragkörper 3 und greift in eine nur teilweise dargestellte Schiebemuffe 6 ein. Der Tragkörper 3, die Schaltgabel 2 und die Führungsgabel 4 sind spanlos aus Blech gefertigt. Die Vorrichtung 1 ist mittels eines Wälzlagers 7 auf einem Tragelement 8 gelagert. Das Tragelement 8 ist durch eine nur teilweise dargestellte Schaltwelle gebildet. Das Wälzlager 7 besteht aus Wälzkörpern 7a und einem die Wälzkörper 7a führenden Käfig 7b. Die Innenlaufbahn des Wälzlagers 7 ist durch die Außenmantelfläche des Tragelementes 8 gebildet. An dem Tragkörper 3 ist die Außenlaufbahn 3a für die Wälzkörper 7a ausgebildet. Der Käfig 7b ist mit einem begrenzten Weg auf dem Tragelement 8 verschiebbar angeordnet. Ein Mittel für die Wegbegrenzung des Käfigs 7b bildet ein Bord 3b des Tragkörpers 3. An dem anderen in Längsrichtung weisenden Ende des Tragkörpers 3 ist die in Längsrichtung über den Tragkörper 3 herausragende Kunststoffscheibe 5 angeordnet. Die Kunststoffscheibe 5 bildet einen Axialanschlag 9 für den Käfig 7b in diese Richtung. Dazu ist die Kunststoffscheibe 5 mit einem Zentrierbord 5a versehen, der in die Aufnahme 3c des Tragkörpers 3 eingreift und die Kunststoffscheibe 5 somit zum Tragkörper 3 und zum Tragelement 8 zentriert. Die Kunststoffscheibe 5 ist mittels eines Preßsitzes des Zentrierbordes 5a in der Aufnahme 3c befestigt.

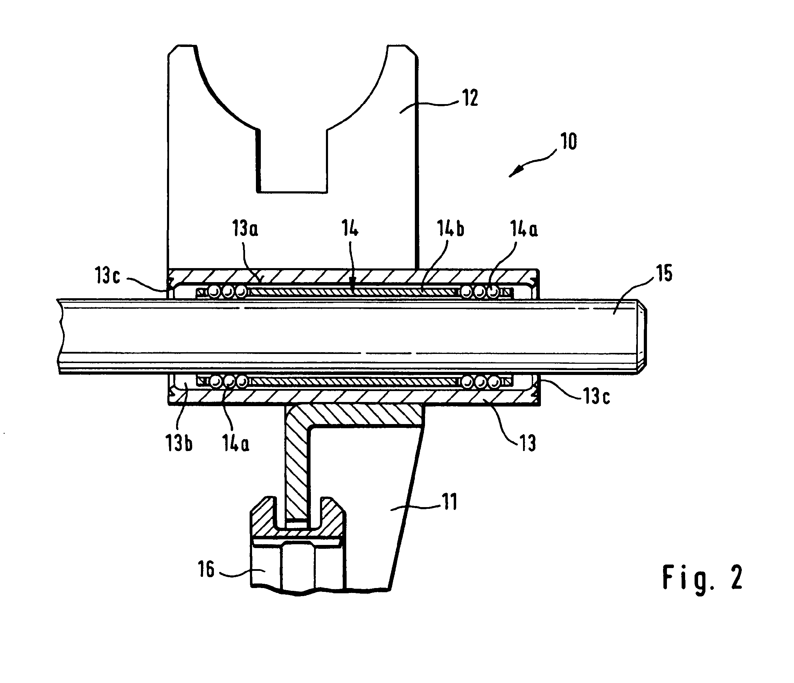

Figur 2 zeigt eine nicht erfindungsgemäße Vorrichtung 10 zum Übertragen von Wähl- und/oder Schaltbewegungen mit einer weiteren Schaltgabel 11 als Betätigungsglied, einer Führungsgabel 12 und einem Tragkörper 13. Die Schaltgabel 11 sowie die Führungsgabel 12 sind an den Tragkörper 13 unlösbar mittels Schweißungen befestigt. Die Vorrichtung 10 ist mittels eines Wälzlagers 14 längsverschiebbar und schwenkbar auf einem Tragelement 15 gelagert. Die Schaltgabel 11 greift in eine nur teilweise dargestellte Schiebemuffe 16 ein. Das Wälzlager 14 ist durch Wälzkörper 14a sowie einen die Wälzkörper 14a führenden Käfig 14b gebildet. Die Innenlaufbahn des Wälzlagers 14 ist die Oberfläche des Tragelementes 15, auf der das Wälzlager sitzt. Der Tragkörper 13 weist eine Außenlaufbahn 13a für die Wälzkörper 14a des Wälzlagers 14 auf. Der Tragkörper 13 ist aus einem aufgeweiteten und kalibrierten Rohr gebildet und weist an seinen in Längsrichtung weisenden Enden jeweils ein Mittel für die Wegbegrenzung des Käfigs 14b auf. Das Mittel für die Wegbegrenzung des Käfigs 14b ist durch jeweils einen umlaufenden von dem Tragkörper 13 radial nach innen in die Aufnahme 13b abgehenden ausgeprägten Vorsprung 13c gebildet.

### Bezugszeichen

- 1: Vorrichtung
- 2: Schaltgabel
- 3: Tragkörper
- 3a: Außenlaufbahn
- 3b: Bord
- 3c: Aufnahme
- 4: Führungsgabel
- 5: Kunststoffscheibe
- 5a: Zentrierbord
- 6: Schiebemuffe
- 7: Wälzlager
- 7a: Wälzkörper
- 7b: Käfig
- 8: Tragelement
- 9: Axialanschlag
- 10: Vorrichtung
- 11: Schaltgabel
- 12: Führungsgabel
- 13: Tragkörper
- 13a: Außenlaufbahn
- 13b: Aufnahme
- 13c: Vorsprung
- 14: Wälzlager
- 14a: Wälzkörper
- 14b: Käfig
- 15: Tragelement
- 16: Schiebemuffe

## Patentansprüche

1. Vorrichtung (1, 10) zum Übertragen von Wähl- und/oder Schaltbewegungen mit zumindest einem Betätigungsglied, einem das Betätigungsglied tragenden Tragkörper (3, 13) und wenigstens einem innerhalb des Tragkörpers (3, 13) angeordneten, diesen stützenden Wälzlager (7, 14), wobei das Wälzlager (7, 14) Wälzkörper (7a, 14a) für eine längsbewegliche und/oder schwenkbewegliche Lagerung des Tragkörpers (3, 13) auf einem Tragelement (8, 15), wenigstens einen die Wälzkörper (7a, 14a) führenden Käfig (7b, 14b) und zumindest eine an dem Tragkörper (3, 13) ausgebildete Laufbahn (3a, 13a) aufweist, **dadurch gekennzeichnet, dass** der Tragkörper (3) wenigstens eine an zumindest einem in Längsrichtung weisenden Ende des Tragkörpers (3) angeordnete sowie zumindest in Längsrichtung über den Tragkörper (3) herausragende Kunststoffscheibe (5) aufweist.

2. Vorrichtung nach Anspruch 1, **dadurch gekennzeichnet, dass** das Betätigungsglied durch eine Schaltgabel (2, 11) gebildet ist.

3. Vorrichtung nach Anspruch *1, **dadurch gekennzeichnet, dass** der* Tragkörper (13) und *das* Betätigungsglied spanlos aus Blech gefertigt sind und *dass* das Betätigungsglied mittels eines Preßsitzes auf dem Tragkörper (13) befestigt ist.

4. Vorrichtung nach Anspruch *1, **dadurch gekennzeichnet, dass*** der Tragkörper (3, 13) und Betätigungsglied spanlos aus Blech gefertigt sind und *dass* das Betätigungsglied unlösbar an dem Tragkörper (3, 13) befestigt ist.

5. Vorrichtung nach Anspruch 1, **dadurch gekennzeichnet, dass** der Käfig (7b) in Längsrichtung relativ zu der Laufbahn (3a) beweglich in einer in Längsrichtung ausgerichteten Aufnahme (3c) des Tragkörpers (3) aufgenommen ist und dass die Kunststoffscheibe (5) mit einem Axialanschlag (9) für den Käfig (7b) versehen ist.

## Claims

1. Device (1, 10) for transmission of gear selecting and/or gear shifting movements, said device comprising at least one actuating member, one carrier body (3, 13) for supporting the actuating member and at least one rolling bearing (7, 14) arranged within the carrier body (3, 13) for supporting the carrier body (3, 13), which rolling bearing (7, 17), for enabling a longitudinally displaceable and/or pivoting mounting of the carrier body (3, 13) on a carrier element (8, 15), comprises rolling elements (7a, 14a) and further comprises at least one cage (7b, 14b) for guiding the rolling elements (7a, 14a) and at least one raceway (3a, 13a) which is configured on the carrier body (3, 13), **characterised in that** the carrier body (3) comprises at least one plastic disk (5) that is arranged on at least one end of the carrier body (3) pointing in longitudinal direction and projects at least in longitudinal direction beyond the carrier body (3).

2. Device according to claim 1, **characterised in that** the actuating member is constituted by a gearshift fork (2, 11).

3. Device according to claim 1, **characterised in that** the carrier body (13) and the actuating member are made without chip removal out of sheet metal, and that the actuating member is fixed on the carrier body (13) by means of an interference fit.

4. Device according to claim 1, **characterised in that** the carrier body (3, 13) and the actuating member are made without chip removal out of sheet metal, and the actuating member is inseparably fixed on the carrier body (3, 13).

5. Device according to claim 1, **characterised in that** the cage (7b) is received in a longitudinally oriented reception (3c) of the carrier body (3) for longitudinal displacement relative to the raceway (3a), and that the plastic disk (5) is provided with an axial stop (9) for the cage (7b).

## Revendications

1. Dispositif (1, 10) pour la transmission de mouvements de sélection et/ou de mouvements de changement de vitesse, ledit dispositif comprenant, au moins, un membre d'actionnement, un corps de support (3, 13) pour supporter le membre d'actionnement et, au moins, un roulement (7, 14) agencé dans le corps de support (3, 13) pour supporter celui-ci, ledit roulement (7, 14), pour permettre un montage du corps de support (3, 13) en mouvement longitudinal et/ou en mouvement de pivotement sur un élément de support (8, 15), comprenant des corps roulants (7a, 14a), ledit roulement (7, 14) comprenant, en outre, au moins, une cage (7b, 14b) pour le guidage des corps roulants (7a, 14a) et, au moins, une piste (3a, 13a) de roulement configurée sur le corps de support (3, 13), **caractérisé en ce que** le corps de support (3) comprend, au moins, un disque (5) plastique qui est agencé à, au moins, l'une des extrémités du corps de support (3) orientée en direction longitudinale, et que ledit disque (5) s'étend, au moins, en direction longitudinale au-delà du corps de support (3).

2. Dispositif selon la revendication 1, **caractérisé en ce que** le membre d'actionnement est constitué par une fourchette (2, 11) de changement de vitesse.

3. Dispositif selon la revendication 1, **caractérisé en ce que** le corps de support (13) et le membre d'actionnement sont fabriqués sans enlèvement de copeaux à partir d'une tôle métallique, et que le membre d'actionnement est fixé au corps de support (13) par engagement à la presse.

4. Dispositif selon la revendication 1, **caractérisé en ce que** le corps de support (3, 13) et le membre d'actionnement sont fabriqués sans enlèvement de copeaux à partir d'une tôle métallique, et que le membre d'actionnement est fixé de manière non détachable au corps de support (3, 13).

5. Dispositif selon la revendication 1, **caractérisé en ce que** la cage (7b) est reçue en mouvement longitudinale par rapport à la piste (3a) de roulement dans une réception (3c) du corps de support (3) orientée en direction longitudinale, et que le disque (5) plastique est muni d'une butée axiale (9) pour la cage (7b).
